# EUROPÄISCHE PATENTSCHRIFT

(11) **EP 4 089 039 B1**
(45) Veröffentlichungstag und Bekanntmachung des Hinweises auf die Patenterteilung: **02.04.2025**
(21) Anmeldenummer: 22172134.3
(22) Anmeldetag: 06.05.2022
(51) Int. Cl.: B65G 17/00, B23Q 7/14, B65G 15/42, B65G 21/20, B65G 23/06

(54) **KOMBINATION AUS EINER TRANSPORTEINRICHTUNG UND MINDESTENS EINEM TRÄGER**
COMBINATION OF A TRANSPORT DEVICE AND AT LEAST ONE CARRIER
COMBINAISON D'UN DISPOSITIF DE TRANSPORT ET D'AU MOINS UN SUPPORT

(30) Priorität: 12.05.2021 DE 202021102610 U
(43) Veröffentlichungstag der Anmeldung: 16.11.2022
(73) Patentinhaber: Neuhäuser GmbH, 44532 Lünen (DE)
(72) Erfinder: Neuhäuser, Jürgen, 44532 Lünen (DE)
(74) Vertreter: Andrejewski - Honke Patent- und Rechtsanwälte Partnerschaft mbB

(56) Entgegenhaltungen:
- JP-A- 2007 008 598
- JP-A- S6 260 708
- US-A- 4 925 012
- US-A- 5 529 168
- US-A1- 2003 014 154
- US-A1- 2010 197 435
- US-B1- 6 425 478
- US-B2- 10 919 705

## Beschreibung

Die Erfindung betrifft die Kombination aus einer Transporteinrichtung und Trägern für Teile, Werkstücke etc., wobei die Transporteinrichtung zum insbesondere horizontalen Transport der Träger mit einem Rahmen, und mit zumindest einem gegenüber dem Rahmen umlaufend angetriebenen Förderriemen ausgerüstet ist, und wobei der Förderriemen an seiner Oberseite eine trägerseitige Kontur aufweist, welche zum positionsgenauen Transport an eine unterseitige Kontur des Trägers angepasst ist.

Fertigungsanlagen, wie sie beispielsweise in der DD 293 296 A5 beschrieben werden, werden in der Regel genutzt, um Einzelteile und insbesondere Werkstücke mithilfe beispielsweise eines zugehörigen Trägers zu verschiedenen Bearbeitungsstationen zu fördern. In den Bearbeitungsstationen werden dann die Teile bzw. Werkstücke zu Gesamtanlagen komplettiert. In diesem Zusammenhang kommen bei der bekannten Fertigungsanlage im Rahmen der Darstellung in der dortigen Fig. 4 unter anderem als Zahnriemen ausgebildete Förderriemen zum Einsatz, die mit Seitenführungsleisten zusammenwirken. Die Seitenführungsleisten sind auf der Unterseite von Fahrwerken der Träger vorgesehen. Mithilfe der Fahrwerke werden Paletteneinsätze transportiert, die wiederum Einzelteile aufnehmen. Dabei kommt es jeweils darauf an, für eine positionsgenaue Anbringung und einen entsprechenden Transport zu sorgen.

Ähnlich wird bei der durch die DE 20 2009 015 682 U1 bekannten Transporteinrichtung vorgegangen. Die Transporteinrichtung verfügt über eine Transfereinrichtung, die ihrerseits mit einem Vorschubantrieb ausgerüstet ist. Der Vorschubantrieb ist durch ein Übertragungsmittel mit einem Tragbalken bzw. Rahmen verbunden. Bei dem Übertragungsmittel kann es sich um einen Riemenantrieb handeln.

Beim gattungsbildenden Stand der Technik nach US 5 529 168 wird so vorgegangen, dass die einzelnen Träger zusammen mit dem umlaufend angetriebenen Förderriemen transportiert werden. Die Führung der einzelnen Träger erfolgt dabei durch mechanische Führungsmittel.

Bei der JP 2007 008 598 A geht es um den Transport von Papier entlang eines Förderriemens. Dazu ist eine Saugeinheit vorgesehen, welche an Öffnungen im Förderriemen einen Unterdruck erzeugt. Außerdem ist der Förderriemen jeweils mit Vorsprüngen zwischen den einzelnen Bohrungen ausgerüstet.

Der Stand der Technik hat sich grundsätzlich bewährt, wenn es darum geht, Träger für Teile, Werkstücke etc. insbesondere horizontal von einer Bearbeitungsstation zur nächsten Bearbeitungsstation zu befördern. Allerdings sind dazu relativ komplizierte Aufbauten des Trägers im Stand der Technik realisiert. Auch werden oftmals Zusatzeinrichtungen an den einzelnen Förderriemen gefordert, um den Transfer des Trägers zielgenau zu ermöglichen. Das führt insgesamt zu erhöhten Kosten einer solchen Transporteinrichtung und einem oftmals ausladenden Aufbau. Hier will die Erfindung insgesamt Abhilfe schaffen.

Der Erfindung liegt das technische Problem zugrunde, eine derartige Kombination so weiter zu entwickeln, dass der konstruktive Aufwand verringert ist und dennoch ein positionsgenauer Transfer zur Verfügung gestellt wird.

Ein erster Aspekt der Erfindung löst diese technische Problemstellung mittels einer Kombination nach Anspruch 1. Hierbei ist eine gattungsgemäße Kombination aus einer Transporteinrichtung und Trägern im Rahmen einer ersten Variante dadurch gekennzeichnet, dass zusätzlich eine den Träger beaufschlagende sowie als Magneteinrichtung ausgebildete Halteeinrichtung im ober am Rahmen vorgesehen ist, wobei in der Längsrichtung des Förderriemens verschiedene schaltbare Magneten realisiert sind, die ein den Förderriemen durchdringendes Magnetfeld erzeugen sowie sich jeweils wahlweise und dem Vorschub des Trägers folgend ein- und ausschalten lassen.

Ein zweiter Aspekt der Erfindung löst die technische Problemstellung mittels einer Kombination nach Anspruch 2. Hierbei ist eine gattungsgemäße Kombination aus einer Transporteinrichtung und Trägern dadurch gekennzeichnet, dass zusätzlich eine den Träger beaufschlagende sowie als Unterdruckeinrichtung ausgebildete Halteeinrichtung im oder am Rahmen vorgesehen ist, wobei die Unterdruckeinrichtung an jeweils Öffnungen im Rahmen einen Unterdruck erzeugt und hierfür einzelne schaltbare Unterdruckeinheiten in Längsrichtung des Rahmens sorgen, und wobei der Förderriemen mit entsprechenden Bohrungen ausgerüstet ist, die mit den Öffnungen im Rahmen kommunizieren.

Erfindungsgemäß wird also mit einem speziellen Förderriemen gearbeitet. Dieser ist nämlich mit der trägerseitigen Kontur ausgerüstet, also einer Kontur, die an die unterseitige Kontur des Trägers angepasst ist. Mit anderen Worten, greifen die trägerseitige Kontur an der Oberseite des Förderriemens und die unterseitige Kontur des Trägers lösbar ineinander, um auf diese Weise mithilfe des umlaufend angetriebenen Förderriemens den betreffenden Träger positionsgenau transportieren und an die gewünschte Stelle zur weiteren Bearbeitung der hiermit transportierten Teile oder Werkstücke zu fördern. Dabei greifen die betreffenden Konturen jeweils lösbar ineinander, um den Träger bedarfsweise vom Förderriemen abheben und beispielsweise gegen einen anderen Träger austauschen zu können.

Der Eingriff zwischen den beiden Konturen einerseits an der Oberseite des Förderriemens und andererseits an der Unterseite des Trägers erfolgt dabei zumindest teilweise kraftschlüssig und/oder formschlüssig. Das heißt, die betreffenden Konturen sind so ausgelegt und aneinander angepasst, dass in zumindest einzelnen Bereichen der Konturen beim Aufsetzen des Trägers auf den Förderriemen punktuell bzw. sektionsweise ein Kraftschluss und/oder Formschluss beobachtet wird. Dadurch ist sichergestellt, dass beim Absetzen des Trägers auf den Förderriemen der Träger von dem Förderriemen transportiert und an einer gewünschten Stelle positionsgenau angehalten werden kann.

Nach vorteilhafter Ausgestaltung ist die trägerseitige Kontur in den Förderriemen eingelassen und stellt einen Bestandteil des Förderriemens dar. Mit anderen Worten, wird die trägerseitige Kontur in den Förderriemen bei seiner Herstellung von vornherein mit eingebracht. Dadurch entfallen nachträgliche Bearbeitungskosten, ist vielmehr der Förderriemen inklusive trägerseitiger Kontur durch einen in der Regel einheitlichen und einzügigen Herstellungsvorgang gekennzeichnet.

In diesem Zusammenhang hat es sich besonders bewährt, wenn die trägerseitige Kontur mit hochstehenden Zähnen ausgerüstet ist. Die hochstehenden Zähne können dabei vorteilhaft im Querschnitt prismatisch ausgebildet sein. Die regelmäßig prismatische Gestaltung der hochstehenden Zähne ist dabei typischerweise so ausgelegt, dass der Querschnitt des Zahnes in Ablagerichtung des Trägers auf der betreffenden Oberseite des Förderriemens ansteigt, so dass durch den in dieser Ablagerichtung wachsenden Querschnitt des betreffenden Zahnes zugleich der Träger bei seiner Ablage auf der Oberseite des Förderriemens zentriert wird. Denn die unterseitige Kontur am Träger gleitet bei diesem Vorgang an dem jeweiligen und im Querschnitt prismatischen Zahn entlang und wird hierdurch zentriert.

Darüber hinaus wird meistens so vorgegangen, dass der die Teile bzw. Werkstücke aufnehmende Träger die Zähne beidseitig übergreift. Dadurch reicht es aus, wenn der Förderriemen über seinen Querschnitt gesehen nicht entlang seiner gesamten Breite mit den hochstehenden Zähnen ausgerüstet ist, sondern wenn sich diese hochstehenden Zähne lediglich in einem Bereich oder einem Sektor dieser Breite finden. Meistens wird mit zwei Reihen an Zähnen in benachbarter Ausrichtung gearbeitet, die sich längs des Förderriemens erstrecken und voneinander beabstandet sind. Die beiden Zahnreihen verfügen darüber hinaus über einen jeweils seitlichen Abstand zum Rand des Förderriemens. Dadurch kann der auf den Förderriemen aufgelegte Träger zumindest an diesem jeweils beidseitigen Rand die Zähne beidseitig übergreifen.

Zu diesem Zweck ist der Träger vorteilhaft mit einer die Zähne in seinem Innern im Querschnitt gleichsam aufnehmenden Ausnehmung ausgerüstet. Die Ausnehmung verfügt dabei typischerweise im Kopfbereich über die zuvor bereits angesprochene unterseitige Kontur, welche ihrerseits mit der trägerseitigen Kontur an der Oberseite des Förderriemens und konkret den an dieser Stelle vorgesehenen hochstehenden Zähnen wechselwirkt.

Zur Führung und Förderung des Förderriemens wird dieser in der Regel über zwei oder mehr Umlenkrollen am Rahmen geführt. Meistens finden sich die beiden Umlenkrollen jeweils endseitig des Rahmens. Um den Förderriemen mit der gewünschten Geschwindigkeit und Richtung auszurüsten, wird der Förderriemen in der Regel mithilfe wenigstens einer Antriebsrolle beaufschlagt. Dabei hat es sich als besonders günstig erwiesen, wenn die Antriebsrolle benachbart zur Umlenkrolle am Rahmen angeordnet ist. Auf diese Weise wird der Förderriemen zumindest im Bereich der Nachbarschaft zwischen der Umlenkrolle und der Antriebsrolle quasi zwischen der Umlenkrolle und der Antriebsrolle durch einen an dieser Stelle gebildeten Schlitz oder Spalt hindurchgeführt und kann dadurch besonders einwandfrei geführt und angetrieben werden.

Bei dem Förderriemen handelt es sich typischerweise um einen Kunststoffriemen, der in der Regel aus einem thermoplastischen Kunststoff hergestellt ist. Dadurch lässt sich der Kunststoffriemen ganz generell im Zuge eines Extrusionsvorganges produzieren, wobei bei diesem Extrusionsvorgang zugleich die trägerseitige Kontur an der Oberseite des Förderriemens definiert und beim Herstellungsvorgang vorgesehen werden kann. Als geeigneter thermoplastischer Kunststoff hat sich an dieser Stelle Polyamid als besonders günstig erwiesen. Das heißt, der Förderriemen ist zumindest teilweise aus Polyamid gefertigt.

Meistens ist der Förderriemen auch mit zumindest einem Gewebe ausgerüstet, um ihm die nötige Längs- und Querstabilität zu verleihen. Dieses Gewebe kann seinerseits aus Kunststofffäden hergestellt sein, beispielsweise aus Polyamidfäden. Das Gewebe kann dabei in den Förderriemen eingelegt oder beispielsweise auf seine Oberfläche aufgelegt werden oder beides.

Erfindungsgemäß umfasst die Kombination zusätzlich eine den Träger beaufschlagende Halteeinrichtung. Mit Hilfe dieser Halteeinrichtung kann ergänzend der Träger für die Teile bzw. Werkstücke eine Beaufschlagung erfahren. Dadurch wird der Träger mithilfe der Halteeinrichtung zusätzlich in seiner Anlage am Förderriemen gesichert und während des Transportes gehalten. Das ist insbesondere dann besonders vorteilhaft und günstig, wenn der Förderriemen mit hoher Geschwindigkeit von mehreren Metern oder sogar mehreren 10 m/s transportiert und abgebremst wird. Bei der an dieser Stelle eingesetzten Halteeinrichtung handelt es sich im ersten Aspekt der Erfindung um eine Magneteinrichtung und im zweiten Aspekt der Erfindung um eine Unterdruckeinrichtung**.** Die Magneteinrichtung weist mehrere in ihrer Längserstreckung angeordnete und schaltbare Magneten auf, mit deren Hilfe der längs der Magneteinrichtung umlaufende Förderriemen bzw. der vom Förderriemen transportierte Träger durch aufgebaute Magnethaltekräfte zusätzlich während dieses Transportes in Längsrichtung gesichert wird. Dabei lassen sich die einzelnen Magnete jeweils wahlweise und dem Vorschub des Trägers folgend ein- und ausschalten.

Im zweiten Aspekt der Erfindung umfasst die Halteeinrichtung eine Unterdruckeinrichtung, welche mit einzelnen schaltbaren Unterdruckeinheiten ausgerüstet ist. Die Unterdruckeinrichtung sorgt durch einen Unterdruck an dem Träger zugewandten Öffnungen dafür, dass mit ihrer Hilfe der an den Öffnungen erzeugte Unterdruck den demgegenüber daran entlang transportierten Träger festhält. Das bietet sich insbesondere für den Fall an, dass Träger aus nicht magnetisierbaren Materialien zum Einsatz kommen. Wird jedoch mit Trägern aus beispielsweise Stahl und damit einem magnetisierbaren Material gearbeitet, so kann die im ersten Aspekt der Erfindung als Magneteinrichtung ausgebildete Halteeinrichtung für die zusätzliche Sicherung des Trägers am umlaufend angetriebenen Förderriemen sorgen. Außerdem ist hierdurch gewährleistet, dass der Träger auch abrupt mithilfe des Förderriemens abgebremst und an der gewünschten Bearbeitungsstation zum Stehen gebracht wird.

Im Ergebnis wird eine Transporteinrichtung zum insbesondere horizontalen Transport von beispielsweise Trägern für Teile, Werkstücke etc. zur Verfügung gestellt, die besonders einfach und kostengünstig aufgebaut ist und zugleich für einen positionsgenauen Transport des Trägers sorgt. Dabei kommt ein speziell gestalteter und werksseitig mit einer trägerseitigen Kontur ausgerüsteter Förderriemen aus Kunststoff zum Einsatz. Bei diesem Förderriemen kann es sich vorteilhaft um einen Zahnriemen handeln. Dieser Zahnriemen kann dabei nicht nur mit oberseitigen und an die unterseitige Kontur des Trägers angepassten hochstehenden Zähnen ausgerüstet werden. Sondern es besteht auch die Möglichkeit, auch die Unterseite des Förderriemens mit weiteren und gleichen oder hiervon abweichenden Zähnen auszurüsten, um auf diese Weise einen einwandfreien umlaufenden Transport des Förderriemens als Zahnriemen zu gewährleisten. Hierin sind die wesentlichen Vorteile zu sehen.

Im Folgenden wird die Erfindung anhand einer lediglich ein Ausführungsbeispiel darstellenden Zeichnung näher erläutert, es zeigen:
Fig. 1 die erfindungsgemäße Kombination in einer schematischen Übersicht und
Fig. 2 einen Querschnitt durch den Gegenstand nach Fig. 1.

In den Figuren ist eine Transporteinrichtung zum insbesondere horizontalen Transport von beispielsweise Trägern 1 für Teile 2, Werkstücke etc. wiedergegeben. Bei dem Träger 1 kann es sich folglich um einen Werkstückträger handeln. Die Teile 2 bzw. Werkstücke werden an verschiedenen und nicht näher dargestellten Bearbeitungsstationen weiterverarbeitet und zu einer Gesamtheit, beispielsweise einer Maschine, zusammengesetzt.

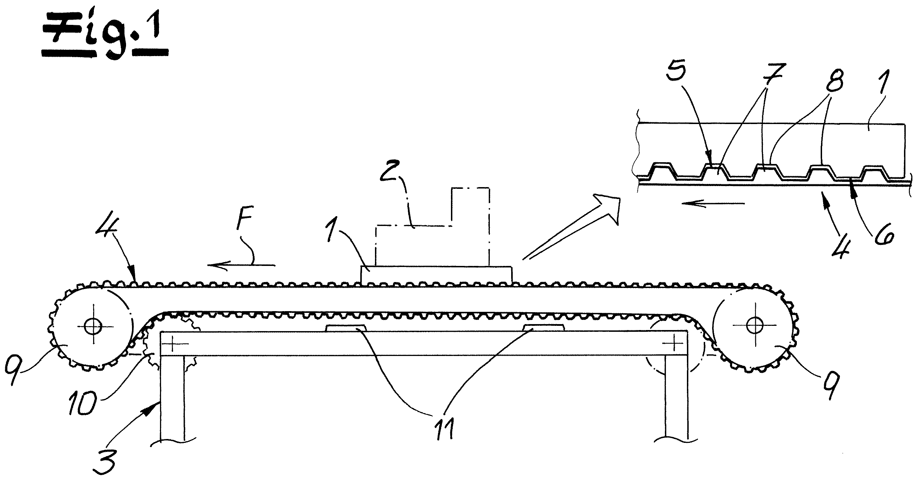

Zu diesem Zweck verfügt die Transporteinrichtung über einen Rahmen 3 und darüber hinaus wenigstens einen gegenüber dem Rahmen 3 umlaufend angetriebenen Förderriemen 4. Das erkennt man anhand der Darstellung in der Fig. 1. Der Förderriemen 4 ist an seiner Oberseite mit einer trägerseitigen Kontur 5 ausgerüstet, welche zum positionsgenauen Transport des Trägers 1 an eine unterseitige Kontur 6 des Trägers 1 angepasst ist.

Tatsächlich wird anhand der Darstellung in der Fig. 1 deutlich, dass die beiden Konturen 5, 6 einerseits an der Oberseite des Förderriemens 4 und andererseits an der Unterseite des Trägers 1 zumindest punktuell bzw. sektionsweise kraft- und/oder formschlüssig sowie lösbar ineinandergreifen. Dadurch wird der Träger 1 nicht nur entlang einer Förderrichtung F des Förderriemens 4 transportiert, sondern ist auch ein positionsgenauer Transport des Trägers 1 möglich. Ebenso ein positionsgenauer Transfer des Trägers 1 zur nächsten Bearbeitungsstation.

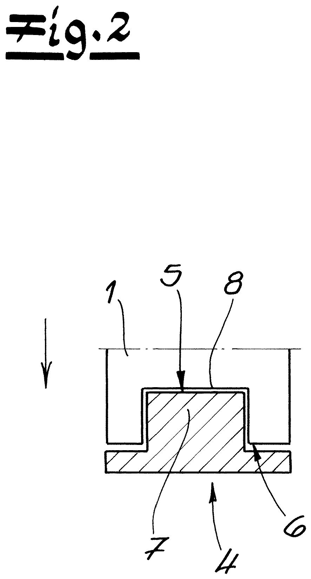

Bei einem Vergleich der Fig. 1 und 2 erkennt man, dass die trägerseitige Kontur 5 in den Förderriemen 4 eingelassen ist und einen Bestandteil des Förderriemens 4 darstellt. Tatsächlich wird die trägerseitige Kontur 5 bei der Herstellung des Förderriemens 4 unmittelbar an seiner Oberseite definiert, indem beispielsweise der Förderriemen 4 durch Extrusion hergestellt wird. Zu diesem Zweck ist der Förderriemen 4 vorteilhaft aus einem thermoplastischen Kunststoff hergestellt.

Tatsächlich ist die trägerseitige Kontur 5 mit hochstehenden Zähnen 7 ausgerüstet. Man erkennt, dass die hochstehenden Zähne 7 im Querschnitt prismatisch ausgebildet sind. Dadurch kommt es bei einer Vereinigung des Trägers 1 mit dem Förderriemen 4 bzw. beim in der Fig. 2 durch einen Pfeil angedeuteten Absenken des Trägers 1 auf der Oberseite des Förderriemens 4 zugleich dazu, dass der Träger 1 gegenüber dem Förderriemen 4 zentriert wird.

Bei einem Vergleich der Fig. 1 und 2 wird deutlich, dass der Träger 1 die Zähne 7 beidseitig übergreift. Dadurch verfügt der Träger 1 über eine die Zähne 7 aufnehmende Ausnehmung 8. Die Ausnehmung 8 ist dabei im Kopfbereich mit der unterseitigen Kontur 6 ausgerüstet, welche mit der trägerseitigen Kontur 5 an der Oberseite des Förderriemens 4 in der beschriebenen Art und Weise zusammenwirkt.

Anhand der Fig. 1 wird deutlich, dass der Förderriemen 4 über zwei Umlenkrollen 9 am Rahmen 3 geführt wird. Die beiden Umlenkrollen 9 finden sich dabei jeweils endseitig des Rahmens 3. Das gilt selbstverständlich nur beispielhaft und ist keinesfalls zwingend. Außerdem wird der Förderriemen 4 mithilfe wenigstens einer Antriebsrolle 10 beaufschlagt. Es können grundsätzlich auch zwei Antriebsrollen 10 vorgesehen sein. Die Antriebsrolle 10 bzw. die jeweilige Antriebsrolle 10 ist dabei benachbart zur Umlenkrolle 9 am Rahmen 3 angeordnet. Da es sich bei dem Förderriemen 4 vorteilhaft um einen Zahnriemen handelt, kommt in der Regel als Antriebsrolle 10 ein Zahnrad zum Einsatz.

Wie bereits erläutert, handelt es sich bei dem Förderriemen 4 um einen Kunststoffriemen, der vorteilhaft aus einem thermoplastischen Kunststoff ganz oder teilweise gefertigt ist. Meistens kommt hier ein thermoplastischer Kunststoff wie insbesondere Polyamid zum Einsatz. Außerdem kann der Förderriemen 4 mit einem eingelegten oder aufgebrachten Gewebe zu seiner Stabilisierung ausgerüstet werden. Das Gewebe ist seinerseits aus Kunststofffäden aufgebaut, die als Polyamidfäden ausgebildet sein können.

In der Fig. 1 ist darüber hinaus noch eine Halteeinrichtung 11 dargestellt und angedeutet. Die Halteeinrichtung 11 ist im oder am Rahmen 3 angeordnet. Außerdem erkennt man, dass sich die Halteeinrichtung 11 entlang und in Längsrichtung des Förderriemens 4 erstreckt.

Bei der Halteeinrichtung 11 kann es sich gemäß des ersten Aspekts der Erfindung um eine Magneteinrichtung oder gemäß des zweiten Aspekts der Erfindung um eine Unterdruckeinrichtung oder nicht erfindungsgemäß auch um beides handeln. Für den Fall, dass die Halteeinrichtung 11 als Magneteinrichtung ausgebildet ist, finden sich in der Längsrichtung des Förderriemens 4 verschiedene schaltbare Magneten bzw. Elektromagneten, die ein den Förderriemen 4 durchdringendes Magnetfeld erzeugen. Auf diese Weise ist die Halteeinrichtung 11 bzw. die an dieser Stelle als Option vorgesehene Magneteinrichtung in der Lage, den Träger 1 zusätzlich in Anlage am Förderriemen 4 bei seinem Transport in der Förderrichtung F sichern und halten zu können.

In diesem Zusammenhang versteht es sich, dass die einzelnen die Magneteinrichtung definierenden schaltbaren Magneten bzw. Elektromagneten jeweils entlang der Förderrichtung F ein- und ausgeschaltet werden können, je nachdem an welcher Position sich jeweils der auf diese Weise zu sichernde Träger 1 befindet. Außerdem setzt diese Vorgehensweise voraus, dass der Träger 1 aus einem magnetisierbaren Material wie beispielsweise Stahl hergestellt ist.

Kommt demgegenüber für den Träger 1 als Werkstoff ein nicht magnetisierbares Material zum Einsatz, so kann alternativ zur zuvor beschriebenen Magneteinrichtung als Halteeinrichtung 11 auch mit einer Unterdruckeinrichtung gearbeitet werden. Diese Unterdruckeinrichtung erzeugt an jeweils Öffnungen im Rahmen 3 einen Unterdruck. Hierfür sorgen einzelne schaltbare Unterdruckeinheiten in Längsrichtung des Rahmens 3. Dazu ist in diesem Fall der Förderriemen 4 mit entsprechenden Bohrungen ausgerüstet, die mit den Öffnungen im Rahmen 3 kommunizieren. Dadurch kann beispielsweise zwischen zwei an der Oberseite des Zahnriemens 4 als trägerseitige Kontur 5 vorgesehenen Reihen an Zähnen 7 ein Unterdruck erzeugt werden, mit dessen Hilfe der in Anlage an der Oberseite des Förderriemens 4 in der Förderrichtung F transportierte Träger 1 zusätzlich angesaugt und bei seinem Transport gesichert wird.

Selbstverständlich ist es nicht erfindungsgemäß auch möglich, als Halteeinrichtung 11 eine kombinierte Magneteinrichtung und Unterdruckeinrichtung einzusetzen. Genauso gut ist die Halteeinrichtung 11 nicht erfindungsgemäß natürlich auch entbehrlich, wenn eine zusätzliche Sicherung des Trägers 1 während seines Transportes in der Förderrichtung F nicht erforderlich ist.

## Patentansprüche

1. Kombination aus einer Transporteinrichtung und mindestens einem Träger (1) für Teile (2), Werkstücke etc., wobei die Transporteinrichtung zum insbesondere horizontalen Transport des Trägers (1) mit einem Rahmen (3), und mit wenigstens einem gegenüber dem Rahmen (3) umlaufend angetriebenen Förderriemen (4) ausgerüstet ist, und wobei der Förderriemen (4) an seiner Oberseite eine trägerseitige Kontur (5) aufweist, welche zum positionsgenauen Transport an eine unterseitige Kontur (6) des Trägers (1) angepasst ist,
**dadurch gekennzeichnet, dass**
zusätzlich eine den Träger (1) beaufschlagende sowie als Magneteinrichtung ausgebildete Halteeinrichtung (11) im oder am Rahmen (3) vorgesehen ist, wobei
in der Längsrichtung des Förderriemens (4) verschiedene schaltbare Magneten realisiert sind, die ein den Förderriemen (4) durchdringendes Magnetfeld erzeugen sowie sich jeweils wahlweise und dem Vorschub des Trägers (1) folgend ein- und ausschalten lassen.

2. Kombination aus einer Transporteinrichtung und mindestens einem Träger (1) für Teile (2), Werkstücke etc., wobei die Transporteinrichtung zum insbesondere horizontalen Transport des Trägers (1) mit einem Rahmen (3), und mit wenigstens einem gegenüber dem Rahmen (3) umlaufend angetriebenen Förderriemen (4) ausgerüstet ist, und wobei der Förderriemen (4) an seiner Oberseite eine trägerseitige Kontur (5) aufweist, welche zum positionsgenauen Transport an eine unterseitige Kontur (6) des Trägers (1) angepasst ist, **dadurch gekennzeichnet, dass**
zusätzlich eine den Träger (1) beaufschlagende sowie als Unterdruckeinrichtung ausgebildete Halteeinrichtung (11) im oder am Rahmen (3) vorgesehen ist, wobei
die Unterdruckeinrichtung an jeweils Öffnungen im Rahmen (3) einen Unterdruck erzeugt und hierfür einzelne schaltbare Unterdruckeinheiten in Längsrichtung des Rahmens (3) sorgen, und wobei
der Förderriemen (4) mit entsprechenden Bohrungen ausgerüstet ist, die mit den Öffnungen im Rahmen (3) kommunizieren.

3. Kombination nach Anspruch 1 oder 2, **dadurch gekennzeichnet, dass** die trägerseitige Kontur (5) in den Förderriemen (4) eingelassen ist und einen Bestandteil des Förderriemens (4) darstellt.

4. Kombination nach einem der Ansprüche 1 bis 3, **dadurch gekennzeichnet, dass** die trägerseitige Kontur (5) mit hochstehenden Zähnen (7) ausgerüstet ist.

5. Kombination nach Anspruch 4, **dadurch gekennzeichnet, dass** die hochstehenden Zähne (7) im Querschnitt prismatisch ausgebildet sind.

6. Kombination nach Anspruch 4 oder 5, **dadurch gekennzeichnet, dass** der Träger (1) die Zähne (7) beidseitig übergreift.

7. Kombination nach einem der Ansprüche 4 bis 6, **dadurch gekennzeichnet, dass** der Träger (1) mit einer die Zähne (7) aufnehmenden Ausnehmung (8) ausgerüstet ist.

8. Kombination nach Anspruch 7, **dadurch gekennzeichnet, dass** die Ausnehmung (8) im Kopfbereich die unterseitige Kontur (6) aufweist.

9. Kombination nach einem der Ansprüche 1 bis 8, **dadurch gekennzeichnet, dass** der Förderriemen (4) über zwei Umlenkrollen (9) am Rahmen (3) geführt wird.

10. Kombination nach einem der Ansprüche 1 bis 9, **dadurch gekennzeichnet, dass** der Förderriemen (4) mithilfe wenigstens einer Antriebsrolle (10) beaufschlagt wird.

11. Kombination nach Anspruch 10, **dadurch gekennzeichnet, dass** die Antriebsrolle (10) benachbart zur Umlenkrolle (9) am Rahmen (3) angeordnet ist.

12. Kombination nach einem der Ansprüche 1 bis 11, **dadurch gekennzeichnet, dass** der Förderriemen (4) als Kunststoffriemen aus einem thermoplastischen Kunststoff ausgebildet ist.

13. Kombination nach Anspruch 12, **dadurch gekennzeichnet, dass** der Förderriemen (4) zumindest teilweise aus Polyamid gefertigt ist.

14. Kombination nach einem der Ansprüche 1 bis 13, **dadurch gekennzeichnet, dass** der Förderriemen (4) mit einem Gewebe ausgerüstet ist.

## Claims

1. A combination of a transport device and at least one carrier (1) for parts (2), workpieces etc., wherein, for the in particular horizontal transport of the carrier (1), the transport device is equipped with a frame (3) and with at least one conveyor belt (4) driven in circulation relative to the frame (3), and wherein the conveyor belt (4) has, on its upper side, a carrier-side contour (5), which is complementary to a lower-side contour (6) of the carrier (1) for positionally accurate transport,
**characterised in that**
a holding device (11), which loads the carrier (1) and is designed as a magnetic device, is additionally provided in or on the frame (3), wherein, in the longitudinal direction of the conveyor belt (4), different switchable magnets are implemented, which generate a magnetic field passing through the conveyor belt (4) and can each be switched on and off optionally and following the advance of the carrier (1).

2. A combination of a transport device and at least one carrier (1) for parts (2), workpieces etc., wherein, for the in particular horizontal transport of the carrier (1), the transport device is equipped with a frame (3) and with at least one conveyor belt (4) driven in circulation relative to the frame (3), and wherein the conveyor belt (4) has, on its upper side, a carrier-side contour (5), which is complementary to a lower-side contour (6) of the carrier (1) for positionally accurate transport,
**characterised in that**
a holding device (11), which loads the carrier (1) and is designed as a vacuum device, is additionally provided in or on the frame (3), wherein the vacuum device generates a vacuum in each case at openings in the frame (3), which is ensured by individual switchable vacuum units in the longitudinal direction of the frame (3), and wherein the conveyor belt (4) is equipped with corresponding holes, which communicate with the openings in the frame (3).

3. The combination according to Claim 1 or 2, **characterised in that** the carrier-side contour (5) is let into the conveyor belt (4) and is a component of the conveyor belt (4).

4. The combination according to one of Claims 1 to 3, **characterised in that** the carrier-side contour (5) is equipped with upright teeth (7).

5. The combination according to Claim 4, **characterised in that** the upright teeth (7) are prismatic in cross section.

6. The combination according to Claim 4 or 5, **characterised in that** the carrier (1) fits over the teeth (7) on both sides.

7. The combination according to one of Claims 4 to 6, **characterised in that** the carrier (1) is equipped with a recess (8) receiving the teeth (7).

8. The combination according to Claim 7, **characterised in that** the recess (8) has the lower-side contour (6) in the head region.

9. The combination according to one of Claims 1 to 8, **characterised in that** the conveyor belt (4) is guided over two deflection rollers (9) on the frame (3).

10. The combination according to one of Claims 1 to 9, **characterised in that** the conveyor belt (4) is loaded with the aid of at least one drive roller (10).

11. The combination according to Claim 10, **characterised in that** the drive roller (10) is arranged adjacently to the deflection roller (9) on the frame (3).

12. The combination according to one of Claims 1 to 11, **characterised in that** the conveyor belt (4) is designed as a plastic belt made of a thermoplastic material.

13. The combination according to Claim 12, **characterised in that** the conveyor belt (4) is manufactured at least partially from polyamide.

14. The combination according to one of Claims 1 to 13, **characterised in that** the conveyor belt (4) is equipped with a woven fabric.

## Revendications

1. Association d'un dispositif de transport et d'au moins un support (1) pour des pièces (2), pièces à usiner etc., le dispositif de transport étant équipé pour le transport notamment horizontal du support (1) avec un cadre (3) et avec au moins une courroie de convoyage (4) entrainée en périphérie par rapport au cadre (3) et la courroie de convoyage (4) comportant sur une face supérieure un contour (5) côté support, qui pour assurer un transport en position exacte est adapté à un contour (6) sur la face inférieure du support (1), **caractérisée en ce qu'**il est prévu additionnellement dans ou sur le cadre (3) un dispositif de maintien (11) sollicitant le support (1) et conçu sous la forme d'un dispositif aimanté, dans la direction longitudinale de la courroie de convoyage (4) étant réalisés différents aimants commutables qui génèrent un champ magnétique pénétrant la courroie de convoyage (4) et qui sont susceptibles d'être activés et désactivés sélectivement et en suivant l'avance du support (1).

2. Association d'un dispositif de transport et d'au moins un support (1) pour des pièces (2), pièces à usiner etc., le dispositif de transport étant équipé pour le transport notamment horizontal du support (1) avec un cadre (3) et avec au moins une courroie de convoyage (4) entrainée en périphérie par rapport au cadre (3) et la courroie de convoyage (4) comportant sur une face supérieure un contour (5) côté support, qui est adapté pour un transport en position exacte à un contour (6) sur la face inférieure du support (1), qui pour assurer un transport en position exacte est adapté à un contour (6) sur la face inférieure du support (1), **caractérisée en ce qu'**il est prévu additionnellement dans ou sur le cadre (3) un dispositif de maintien (11) sollicitant le support (1) et conçu sous la forme d'un dispositif à dépression, le dispositif à dépression générant une dépression sur chaque fois des orifices dans le cadre (3) et des unités de dépression individuelles commutables dans la direction longitudinale du cadre (3) assurant ce phénomène et la courroie de convoyage (4) étant équipée de perçages correspondants, qui communiquent avec les orifices dans le cadre (3).

3. Association selon la revendication 1 ou 2, **caractérisée en ce que** le contour (5) côté support est encastré dans la courroie de convoyage (4) et représente un élément constitutif de la courroie de convoyage (4).

4. Association selon l'une quelconque des revendications 1 à 3, **caractérisée en ce que** le contour (5) côté support est équipé de dents (7) dressées vers le haut.

5. Association selon la revendication 4, **caractérisée en ce que** les dents (7) dressées vers le haut sont conçues avec une section transversale prismatique.

6. Association selon la revendication 4 ou 5, **caractérisée en ce que** le support (1) chevauche les dents (7) de part et d'autre.

7. Association selon l'une quelconque des revendications 4 à 6, **caractérisée en ce que** le support (1) est équipé d'un évidement (8) qui réceptionne les dents (7).

8. Association selon la revendication 7, **caractérisée en ce que** l'évidement (8) comporte dans la zone haute le contour (6) de face inférieure.

9. Association selon l'une quelconque des revendications 1 à 8, **caractérisée en ce que** la courroie de convoyage (4) est guidée sur le cadre (3) par l'intermédiaire de deux galets de renvoi (9).

10. Association selon l'une quelconque des revendications 1 à 9, **caractérisée en ce que** la courroie de convoyage (4) est sollicitée à l'aide d'au moins un galet d'entraînement (10).

11. Association selon la revendication 10, **caractérisée en ce que** le galet d'entraînement (10) est placé sur le cadre (3), au voisinage du galet de renvoi (9).

12. Association selon l'une quelconque des revendications 1 à 11, **caractérisée en ce que** la courroie de convoyage (4) est conçue sous la forme d'une courroie en matière plastique dans une matière thermoplastique.

13. Association selon la revendication 12, **caractérisée en ce que** la courroie de convoyage (4) est fabriquée au moins partiellement en polyamide.

14. Association selon l'une quelconque des revendications 1 à 13, **caractérisée en ce que** la courroie de convoyage (4) est équipée d'un tissu.
